# FASCICULE DE BREVET EUROPEEN

(11) **EP 2 117 321 B1**
(45) Date de publication et mention de la délivrance du brevet: **20.04.2016**
(21) Numéro de dépôt: 08716793.8
(22) Date de dépôt: 11.02.2008
(51) Int. Cl.: A01N 25/00, A01N 63/00, A01M 1/02, A01M 1/20

(54) **DISPOSITIF DE LUTTE BIOLOGIQUE CONTRE LES RAVAGEURS**
GERÄT FÜR DIE BIOLOGISCHE SCHÄDLINGSBEKÄMPFUNG
DEVICE FOR BIOLOGICAL PEST CONTROL

(30) Priorité: 12.02.2007 FR 0700959
(43) Date de publication de la demande: 18.11.2009
(73) Titulaire: Bonduelle, Sébastien, 64270 SALIES DE BEARN (FR)
(72) Inventeur: Bonduelle, Sébastien, 64270 SALIES DE BEARN (FR)
(74) Mandataire: Ipside
(86) Numéro de dépôt international: PCT/EP2008/051601
(87) Numéro de publication internationale: WO 2008/101827

(56) Documents cités:
- EP-A- 0 465 114
- GB-A- 2 174 907
- GB-A- 2 419 531
- GB-A- 2 426 196
- US-A- 5 172 514
- US-A- 5 427 784

## Description

La présente invention appartient au domaine de la lutte biologique pour la protection phytosanitaire des cultures, et plus particulièrement des dispositifs destinés à éradiquer les ravageurs phytophages.

Elle a pour objet un dispositif de lutte contre les arthropodes nuisibles aux cultures associant une phéromone apte à attirer un arthropode que l'on souhaite contrôler et un microorganisme parasite du même arthropode, sur un support solide constituant un milieu nutritif pour ledit microorganisme. Un kit de préparation et un procédé associé sont également objet de l'invention.

Les insectes et plus généralement les arthropodes phytophages, sous leur forme adulte ou larvaire, peuvent causer des dégâts considérables dans les parcelles cultivées. Les conséquences économiques en sont parfois très lourdes. Pour lutter contre ce fléau, les agriculteurs ont massivement recours aux insecticides. Le problème est que ceux-ci sont polluants, peu sélectifs et ont une durée d'action limitée. Pour réduire les inconvénients d'un épandage extensif d'insecticide sur les parcelles, il a été imaginé d'utiliser des phéromones perturbant le comportement des espèces concernées.

Les phéromones sont des substances émises par la plupart des animaux et qui servent de messagers chimiques entre les individus d'une même espèce. Elles sont extrêmement actives et agissent en quantités infinitésimales, si bien qu'elles peuvent parfois être détectées à plusieurs kilomètres. Elles constituent la principale voies de communication chez les arthropodes et singulièrement chez les insectes : elles jouent par exemple un rôle dans l'attraction sexuelle en indiquant la disponibilité des femelles, dans l'agrégation en attirant les individus des deux sexes. On connaît également des phéromones de territoire, de trace, d'alarme ou d'espacement. De nombreuses phéromones ont été identifiées et plusieurs sont désormais obtenues par synthèse chimique.

Une première méthode, reposant sur la confusion sexuelle, consiste à installer des diffuseurs de phéromones sur les plants afin de brouiller les communications chimiques entre les mâles et les femelles en inondant l'atmosphère d'une phéromone de synthèse mimant les phéromones sexuelles. Ainsi, mâles et femelles ne peuvent se retrouver, ce qui empêche toute reproduction, et donc tout développement de la population de ravageurs. De telles phéromones sont par exemple utilisées dans les vergers et vignes, pour lutter contre les Lépidoptères ravageurs. L'efficacité de cette méthode de lutte dépend de multiples facteurs, comme le degré d'infestation, l'étendue de la culture, la présence éventuelle d'hôtes secondaires. Si la population visée est trop importante, ou la parcelle traitée trop petite, les mâles parviennent tout de même à trouver des femelles qui peuvent pondre dans celle-ci.

Une seconde méthode consiste à utiliser une phéromone pour attirer l'espèce ciblée vers un piège. Un dispositif a été conçu, connu sous le nom de "Attract and KiLL™", dans lequel les insectes sont attirés sans qu'ils puissent en ressortir. On utilise à titre d'appât soit des phéromones d'agrégation qui attirent les deux sexes, soit des phéromones sexuelles.

Une autre voie de lutte contre les ravageurs est également suivie, qui constitue une alternative très prometteuse pour assurer une protection phytosanitaire performante et durable. Il s'agit de la lutte biologique par utilisation de microorganismes entomopathogènes. Certains champignons en particulier, s'attaquent naturellement aux insectes en les parasitant. Plusieurs sont déjà utilisés pour protéger les cultures notamment en Europe, en Chine ou en Russie. Actuellement, une dizaine de ces bioinsecticides sont commercialisés, notamment *Beauveria bassinia* contre la pyrale du maïs, *Beauveria brongnartii* contre le ver blanc, et *Verticillium lecanii* contre les aleurodes en serre. Les formulations sont conçues pour être apportées sous forme liquide par pulvérisation sur les végétaux ou sous forme de granulés qui sont déversés sur les parcelles. Un avantage essentiel de l'emploi d'entomopathogènes est qu'il est possible de choisir un couple parasite-hôte, de manière à éradiquer spécifiquement une espèce indésirable.

Malheureusement, les applications au champ ne donnent souvent que de piètres résultats, en relation entre autre avec des contraintes liées à leur conservation.

Pour mieux protéger la préparation de spores parasites et optimiser son impact sur la population de ravageurs, il a été imaginé de réaliser des pièges contenant une phéromone et un pathogène. EP 465114 propose une méthode de lutte contre les insectes ravageurs par laquelle on associe un pathogène et une substance attractive telle qu'une phéromone ou un élément coloré. Dans le brevet US 5427784, on ensemence un gel nutritif placé dans une coupelle avec le pathogène choisi, puis au bout d'une semaine, on installe la coupelle à l'envers, de manière qu'elle forme le plafond d'une chambre de contamination dans laquelle les insectes sont attirés par une phéromone ou une autre substance.

Des essais ont été conduits avec des pièges attractifs du charançon du bananier *Cosmopolites sordidus* qui étaient alors parasité par un nématode pathogène *Steinernema carpocapsae* au moyen de larves de *Galleria mellonella,* préalablement infectées. Durant dix mois, chaque semaine des nouvelles larves de *G. mellonella* étaient replacées dans les pièges. Des résultats prometteurs ont été obtenus (Chabrier C. et coll., Nematology, 4, (2), p. 190-191). Dans un autre essai expérimental, des pièges appâtés avec une phéromone d'agrégation ont été utilisés pour augmenter la dissémination du champignon entomopathogène *Beauveria bassiana* afin de contrôler C. *sordidus.* On a observé que les charançons infestés transmettaient le champignon pathogène à des individus sains au champ (Tinzaara W., MusAfrica, 2, (1), p.19-20).

Ces essais démontrent l'intérêt de l'emploi des phéromones en association avec un parasite pathogène dans la lutte contre les insectes ravageurs. Toutefois, pour être efficace, le traitement de la zone de culture doit être complet et prolongé dans le temps. Or, la phase parasitaire du champignon pathogène démarre lorsque les spores sont emportées après un contact avec l'insecte hôte. Les spores germent et pénètrent le tégument, puis le champignon prolifère dans l'hôte jusqu'à entraîner sa mort. Lorsque les conditions sont favorables, le mycélium traverse la cuticule et émet de nouvelles spores qui peuvent être disséminées dans le milieu environnant, essentiellement par transport aérien. Toutefois, malgré le nombre considérable de spores libérées, la plupart ne rencontrent pas les conditions nécessaires à leur germination. L'inconvénient majeur de ce processus est donc que le plus souvent, le traitement s'arrête lorsque les spores apportées par le piège sont épuisées. C'est pourquoi un apport unique de spores du pathogène, que ce soit par épandage ou par piégeage, est insuffisant pour assurer un effet durable permettant de contrôler un ravageur d'une culture durant toute la durée du cycle végétal, et garantir ainsi une bonne récolte et/ou la pérennité des cultures pluriannuelles. Ceci impose à l'agriculteur de renouveler régulièrement la source de pathogène dans la zone concernée, en remplaçant ou en rechargeant de pathogène les dispositifs de piégeage dans la zone traitée. Ceci soulève plusieurs problèmes, d'ordre économique d'abord, étant donnés les coûts des produits et de la main d'oeuvre nécessaires, mais aussi d'ordre pratique, dans la mesure où le dépôt de pièges n'est pas toujours aisé dans les cultures en cours de développement. Or, pour une utilisation agricole efficace, il est indispensable de disposer d'un moyen simple et pratique permettant un traitement continu et durable des parcelles.
Le but de la présente invention est de remédier à ces inconvénients en proposant un dispositif fiable de lutte contre les insectes ou plus généralement contre les arthropodes ravageurs, et ayant une durée d'action prolongée. Un autre but de l'invention est d'utiliser le potentiel de reproduction naturel de l'entomopathogène pour limiter la quantité de produit formulé à appliquer au champ. Un autre but est de disposer d'un nombre important de points de dissémination de l'entomopathogène. Un autre but de la présente invention est de proposer un dispositif ne présentant pas de risque pour l'environnement. Encore un autre but de l'invention est de fournir un dispositif bon marché et simple d'utilisation. Un autre but de l'invention est de fournir un système pouvant être facilement stocké et conservé avant utilisation.
Pour cela il est proposé un dispositif de lutte contre les arthropodes nuisibles aux cultures comprenant les caractéristiques de la revendication indépendante 1.

Dans un tel dispositif, le microorganisme pathogène est déposé sur le support qu'il colonise en y puisant les éléments nutritifs dont il a besoin. Une fois placé dans la zone de culture à traiter, le dispositif attire l'insecte cible qui est infecté par le pathogène et va le transporter jusqu'à son groupe qui sera touché à son tour. Ce processus se reproduit de manière continue, dans la mesure où le microorganisme se développe sur le milieu nutritif, assurant ainsi son propre renouvellement. Il n'est plus nécessaire de remplacer le dispositif qui fonctionne durablement, en principe jusqu'à épuisement des éléments nutritifs apportés par le support. On pourra ainsi qualifier le dispositif objet de l'invention de piège dans le sens où un individu est attiré par un leurre vers une destinée fatale, bien qu'il ne soit pas retenu prisonnier dans le système.
Les espèces nuisibles concernées par la présente invention peuvent être toute sorte d'insectes volants ou rampants, ou plus généralement des arthropodes phytophages. Dans la description qui suit, les deux termes seront employés indifféremment, et il est bien évident que sont visés les insectes comme les représentants nuisibles aux cultures appartenant à d'autres espèces, notamment les araignées, iules, scolopendres et autres myriapodes. On comprend aussi que l'homme du métier connaît les différentes espèces nuisibles qui doivent être ciblées, les insectes dits auxiliaires, c'est-à-dire nuisibles aux espèces nuisibles des cultures, devant quant à eux être épargnés.
Le support peut être réalisé à partir de tout matériau carboné utilisable comme source énergétique et permettant le développement rapide de l'entomopathogène utilisé. Selon l'invention, le support solide est essentiellement constitué de matière d'origine végétale riche en carbone assimilable, compactée en blocs ou en galettes. Bien que la géométrie du support solide puisse être quelconque, la forme en galette présente l'avantage d'une plus grande surface de contact entre le microorganisme pathogène se développant à sa surface et l'arthropode ciblé, ainsi qu'une bonne stabilité au sol. Dans la configuration de fonctionnement, le support solide est ensemencé par le microorganisme pathogène. Il est toutefois préférable que lors de sa commercialisation et de son stockage, le microorganisme soit conservé séparément, sous une forme inactive stable (spores, cellules déshydratées ...).

Selon un mode encore préféré de réalisation du dispositif selon l'invention, ladite matière d'origine végétale est un produit dérivé d'au moins une céréale. Ladite au moins une céréale peut être apportée par exemple sous la forme de grains de céréale soufflés, de grains de céréale cuits et séchés, de farine de céréale, de pâtes alimentaires, d'amidon, ou d'un mélange desdites formes.

Par ailleurs, ladite au moins une céréale peut être choisie notamment parmi le riz, le maïs, le blé, le sorgho, l'avoine ou encore l'orge. Elle peut être choisie par exemple, soit en fonction de la disponibilité de la matière première dans la région de mise en oeuvre du dispositif inventif, soit aussi en tenant compte du savoir-faire de l'homme du métier qui connaît notamment le milieu de culture le mieux adapté à un microorganisme donné. Ces produits peuvent être préparés spécialement pour cette utilisation, mais des produits commerciaux destinés à l'alimentation humaine ou animale conviennent également.

Dans le dispositif selon l'invention, la substance attractive est de préférence une phéromone d'agrégation de l'arthropode visé ou bien sa phéromone sexuelle. On connaît de nombreuses molécules jouant le rôle de signal pour les individus de la même espèce. Un certain nombre sont disponibles dans le commerce et peuvent être utilisées pour la mise en oeuvre de la présente invention. Par exemple, on peut utiliser une phéromone choisie parmi : la sordidine, le ferrolure, le grandlure, le metalure, le rhinolure, le (Z)-3-dodécényl-(E)-2-butènoate, le mélange (0,3:0,7) de géranyl hexanoate et de géranyl octanoate.

La sordidine est la phéromone d'agrégation du charançon du bananier *Cosmopolites sordidus.* Le ferrolure est active sur le charançon asiatique du Palmier *(Rhynchophorus ferugineus).* Le grandlure est quant à lui un mélange de quatre composés agissant sur le charançon du cotonnier *(Anthonomus grandis).* Le metalure est le mélange [4-méthyl-5-nonanol et 2-méthyl-4-heptanol (8:1)], agissant sur *Metamasius hemipterus,* charançon ravageur des cultures tropicales telles que la canne à sucre, le bananier ou le palmiers. Le rhinolure est l'éthylchrysanthèmumate, actif sur le scarabée rhinocéros (*Oryctes rhinocéros*), le (Z)-3-dodécényl-(E)-2-butènoate est la phéromone sexuelle du charançon de la patate douce *(Cylas formicarius),* tandis que le mélange de génanyl hexanoate et de géranyl octanoate attire le taupin obscur *(Agriotes obscurus).*

La phéromone choisie est conditionnée dans un élément la contenant de manière à être diffusée et perçue par l'espèce ciblée tout le temps de fonctionnement du dispositif. Selon un mode de réalisation particulier du dispositif selon l'invention, l'élément contenant ladite phéromone est essentiellement composé d'un matériau polymère solide apte à assurer une diffusion progressive de ladite phéromone. Par exemple, ledit élément peut être un élément massif en polymère réticulé imprégné d'une solution de phéromone, ou bien un récipient en matière plastique apte à contenir ladite phéromone et possédant une paroi poreuse vis-à-vis de celle-ci. L'élément attractif du système pourra par exemple être en polymère de type gomme, imprégné de solution de phéromone, ou un cylindre de PVC ou autre matière plastique poreuse, imbibé de solution de phéromone. On peut également utiliser un sachet en plastique multicouche ou encore un tube de polyéthylène, contenant la solution de phéromone, la diffusion se faisant à travers les parois.

Selon un autre mode de réalisation du dispositif de piégeage selon l'invention, l'élément contenant la phéromone est essentiellement composé d'un gel apte à assurer une diffusion progressive de ladite phéromone. Ce gel peut être coulé dans une coupelle réalisée de préférence en matériau biodégradable ou bien disposé directement sur le support solide s'il a une consistance suffisamment ferme.

Dans le dispositif de piégeage selon l'invention, ledit élément contenant la phéromone est fixé au dit support solide. De cette manière, les éléments du piège sont solidaires, et se suffisent à eux mêmes pour fonctionner : le support solide sert à la fois de milieu nutritif, de moyen de fixation de l'élément attractif et de base du dispositif, qui peut être déposé à même le sol tel quel. Cette fixation peut être réalisée par tout moyen à la disposition de l'homme du métier. En particulier, le support solide peut être doté d'un logement permettant de maintenir l'élément contenant la phéromone. Un élément en polymère ou gélifié peut par exemple être incrusté sur une galette de céréales.

Le microorganisme pathogène utilisé dans le dispositif selon l'invention est choisi bien évidemment en fonction de l'hôte ciblé. L'homme du métier dispose des connaissances nécessaires pour effectuer ce choix, car nombre d'entre eux ont été décrits dans la littérature et certains sont d'ors et déjà utilisés pour assurer la protection des cultures. Ils appartiennent à la famille des virus, des bactéries, des microchampignons, des nématodes et des protozoaires. Les champignons microscopiques sont tout désignés pour la réalisation de l'invention, avec 700 espèces entomopathogènes connues, dont la plupart appartiennent aux classes des Zygomycètes et des Deutéromycètes.

Selon l'invention, de préférence, le microorganisme pathogène de l'arthropode visé est un champignon appartenant à l'ordre des Deutéromycètes (*Fungi imperfecti*). Dans ce cas, les spores du pathogène se développent sur le support nutritif, forment un mycélium qui émet de nouvelles spores, assurant ainsi le renouvellement continu du parasite sur le dispositif. Toutes les formulations d'entomopathogène peuvent être utilisées : poudres mouillables, granulés dispersibles, liquides ou granulés en solution, l'objectif étant d'atteindre une quantité de spores sur le support comprise entre 2,2.10⁵ et 1,11.10⁸ spores viables/cm².

Plus particulièrement, le champignon pathogène peut être choisi parmi les espèces appartenant aux genres Beauveria, de préférence *B*. *bassiana, B. brongniartii, B. tenella ;* Metarhizium, de préférence *M. anisopliae, M. flavoviride ;* Verticillium, de préférence *V. lecanii ;* Erynia ; Hirsutella ; Entomophtora ; Entomophaga.

Selon un mode de réalisation avantageux de l'invention, le dispositif de lutte contre les arthropodes nuisibles aux cultures comprend une préparation de champignon pathogène appartenant à l'espèce *Beauveria,* et un support solide à base de riz compacté constituant un milieu nutritif pour ledit champignon de l'espèce *Beauveria.*
Comme on l'a déjà indiqué, le dispositif est très simple et peut être préparé au champ et déposé directement sur le sol dans la zone culturale à traiter. Selon une caractéristique intéressante, pour éviter que animaux, rongeurs et oiseaux notamment, ne détruisent le support solide, celui-ci peut comprendre une substance amérisante.
Selon une autre caractéristique intéressante, le dispositif inventif peut comprendre en outre un boitier protecteur doté d'au moins une ouverture apte à laisser entrer et sortir l'arthropode visé. Un tel boitier est tout particulièrement recommandé si l'on souhaite protéger le dispositif d'éventuelles intempéries et de la convoitise des animaux.

Selon une autre caractéristique qui ne fait pas partie de l'invention, le dispositif peut comprendre en outre une base en matière plastique constituant un moyen d'isolement dudit dispositif par rapport au sol. Cette base sur laquelle le support solide est fixé, peut être par exemple un disque de diamètre supérieur au support solide. Elle constitue une barrière empêchant, ou au moins limitant l'accès au support des microorganismes du sol pouvant entrer en compétition avec le champignon pathogène. De préférence, la matière plastique utilisée est à base d'amidon de maïs biodégradable.
Est également objet de la présente invention un kit destiné au traitement d'une parcelle agricole contre les arthropodes nuisibles aux cultures, comprenant les caractéristiques de la revendication indépendante 13.

Le kit en question est particulièrement conçu pour la fabrication d'au moins un dispositif selon l'invention décrite plus haut.
Le dispositif selon l'invention (ou le kit permettant de le préparer) peut être utilisé pour éradiquer toute sorte d'insectes sur tout type de cultures, sous réserve bien entendu de choisir le couple hôte/parasite convenable. Il trouve une application particulièrement bien adaptée et efficace dans la lutte contre le charançon du bananier (*Cosmopolites sordidus*), le charançon asiatique du Palmier (*Rhynchophorus ferugineus*), le charançon du cotonnier (*Anthonomus grandis*), *Metamasius hemipterus,* qui est un charançon ravageur des cultures tropicales telles que la canne à sucre, le bananier ou le palmier, le charançon de la patate douce (*Cylas formicarius*), le scarabée rhinocéros (*Oryctes rhinocéros*), le taupin obscur (*Agriotes obscurus*)*.*
Dans les plantations commerciales, la lutte contre ces ravageurs se fait principalement à l'aide de pesticides chimiques. Les insecticides à base de cyclodiènes, autrefois largement utilisés, ont été abandonnés face au développement de populations résistantes et du fait de préoccupations environnementales. Il existe des organophosphorés moins persistants, mais du fait qu'ils sont plus coûteux et plus toxiques pour celui qui les manie, ils ne conviennent guère aux petits producteurs. Le dispositif selon l'invention répond ainsi à un besoin vital pour les cultures, des zones tropicales en particulier.

La mise en oeuvre de l'invention est extrêmement simple et rapide, ce qui constitue un de ses multiples avantages. Ainsi un procédé de lutte contre les arthropodes nuisibles aux cultures peut comprendre essentiellement les étapes consistant à :
- se doter d'une pluralité de dispositifs selon l'invention ;
- répartir lesdits dispositifs sur la parcelle cultivée à traiter.

Sa présentation sous forme de kit est particulièrement adaptée à des conditions rustiques, dont le procédé d'utilisation peut comprendre essentiellement les étapes consistant à :
- se doter d'un kit selon l'invention ;
- verser la préparation de microorganisme dans un volume d'eau pour obtenir une suspension desdits microorganismes ;
- pulvériser ladite suspension sur une pluralité de supports solides,
- répartir lesdits supports solides sur la parcelle cultivée à traiter.

La présente invention sera mieux comprise, et des détails en relevant apparaîtront, à la lumière de la description qui va en être faite et de différentes variantes de réalisation.

### EXEMPLE 1

### Dispositif pour la lutte contre le charançon Cosmopolites sordidus

*Cosmopolites sordidus* est l'un des principaux ravageurs des bananiers, des bananiers plantains et du genre *Ensete.* L'adulte, de couleur noire, mesure 10 à 15 mm. Il se déplace librement, bien qu'on le rencontre le plus souvent entre les gaines foliaires, dans le sol à la base des pieds de bananiers ou dans les débris végétaux. Le charançon a une activité nocturne et il est très sensible au dessèchement.

Le dispositif présenté dans cet exemple associe la sordidine, phéromone d'agrégation de *Cosmopolites sordidus,* le champignon *Beauveria bassiana* connu pour son action pathogène sur C. *sordidus,* et un support solide à base de riz complet soufflé.
- Le support solide est constitué d'une galette de riz complet soufflé, d'un diamètre de 10 cm et d'une épaisseur d'environ 1 cm, constituée de 99,97% de riz complet issu de l'agriculture biologique et de sel.
- La phéromone est la sordidine commercialisée par Arysta Lifescience-France. Cette molécule décrite et synthétisée pour la première fois en 1995, a une attractivité démontrée au champ. Elle est d'abord diluée à raison de 7 mg dans 1 g d'acétate d'isoamyle, puis incorporée dans un gel diffuseur ayant une vitesse d'évaporation bien contrôlée (DOT™, commercialisé par Aiglon), à hauteur de 10% en volume. La composition de phéromone gélifiée est coulée dans une coupelle en plastique biodégradable à base d'amidon de maïs, qui est incrustée dans la galette de riz soufflé. Ce système diffuse environ 0,5 mg de sordidine par jour.
- Le pathogène est le champignon deutéromycète *Beauveria bassiana.* De nombreuses publications font état de son efficacité sur C. *sordidus.* Plusieurs sociétés ont homologué des formulations de spores de ce champignon pour de multiples usages. Nous avons utilisé ici celui commercialisé par Intrachem Italia, sous le nom commercial Biogard SC, dont la quantité de spores viables par ml est de 2,3.10⁷.

### EXEMPLE 2

### Utilisation au champ pour la lutte contre C. sordidus

La mise en oeuvre est simple, consistant à préparer une pluralité de dispositifs en fonction de la superficie à traiter :
1. On prépare une bouillie de spores de B. *bassiana* dont on pulvérise une quantité donnée de manière à obtenir environ 3,7.10⁶ spores par cm² sur les supports de riz.
2. On dépose les dispositifs prêts en quantité déterminée par unité de surface du champ.

Le fonctionnement est le suivant : La sordidine permet d'attirer les C. *sordidus* sur la galette de riz fortement contaminé. La présence du support de développement permet de pulvériser une quantité limitée de préparation de spores, spores qui se développent de manière optimale avec très peu de concurrence. Ce développement aboutit à la production de nouvelles spores, elles même extrêmement libres (aspect de moisissure, avec des spores aussi libres que de la poussière). Dès qu'un insecte entre en contact avec le dispositif, il est infecté et succombe dans les 7 à 21 jours suivant son affection. Une cinquantaine de ces galettes sont réparties uniformément dans les parcelles complantées de bananiers.

Chaque galette est déposée au sol puis pulvérisée d'une quantité approximative de 10 ml de bouillie de *Beauveria bassiana.* Le système est efficace pendant une vingtaine de jours, temps nécessaire pour contaminer un nombre suffisamment important de charançons pour engendrer une épizootie au sein de la population.

### EXEMPLE 3

### Développement de Beauveria bassiana sur support

L'objectif de ce test et de valider la capacité d'une souche de *Beauveria bassiana* produite artificiellement et formulée à coloniser des galettes de riz soufflé et de connaître la durée pendant laquelle cette souche va être dominante sur ce substrat.

### Matériel et méthode

- Galettes de riz soufflé alimentaire (Galettes de riz complet, distribuées sous la marque Bjorg™), composées de 99,7% de riz complet issu de l'agriculture biologique et de sel ; diamètre environ 10 cm, épaisseur environ 1 cm.
- Formulation de *Beauveria bassiana* (réf. BIOGARD SC, IntrachemBio Italia ; Concentration : 2,3x10⁷ spores viables/ml).

Préparation des solutions :
Les solutions sont préparées dans 2 récipients en verre (récipient n°1 et n°2). Le troisième récipient sert de réserve d'eau (n°3). A l'aide d'une seringue, déposer 10 ml dans chacun des récipients n°1 et n°2, puis déposer 3 ml de BIOGARD SC dans le récipient n°1. Déposer à nouveau 10 ml d'eau dans le récipient n°1. Bien mélanger le contenu du récipient n°1 en actionnant plusieurs fois la seringue. Prélever 10 ml de la solution n°1 et la déposer dans le récipient n°2. On obtient les solutions S1 et S2

**Concentration en spores viables/ml de solution :**

| | |
|---|---|
| • Biogard : | 2,3×10⁷ |
| • Solution S1 : | 3,45×10⁶ |
| • Solution S2 : | 1,73×10⁶ |

### Préparation des galettes :

Déposer au fond de deux barquettes en plastique B1 et B2, une feuille de papier buvard et imprégner chacune d'elle de 10 ml d'eau. Sur les feuilles de papier buvard humidifiées, déposer une galette complète de riz soufflé.

### Contamination des substrats :

Prélever 10 ml de la solution S1 et la répartir uniformément sur la galette de la barquette B1. Réaliser la même opération avec la solution S2 et la barquette B2. Refermer chacune des barquettes avec du film transparent étirable.

### Résultats et discussion

Les observations visuelles réalisées sont portées dans le tableau suivant :

| | |
|---|---|
| **J+2 :** | Un très léger voile mycélien translucide commence à se développer de manière localisée. |
| **J+4 :** | Présence d'un mycélium intense blanc/gris qui a colonisé la surface de la galette. |
| **J+16 :** | Le mycélium s'est densifié et prend une tonalité grise plus importante. |
| **J+30 :** | Le mycélium s'est transformé en croûte blanc-verdâtre. Il y a une différence d'aspect entre la modalité 1 et la modalité n°2 : sur la modalité 1 la galette est recouverte de croûte blanche avec un duvet verdâtre en leur centre alors que sur la modalité 2 la croûte est verte. |

D'après ces résultats, il apparaît que *Beauveria bassiana* se développe bien sur ce support. Jusqu'à 16 jours après contamination des galettes, le seul champignon présent est *Beauveria bassiana.* Au-delà, les tonalités colorées tendent à monter que d'autres microorganismes ont pu commencer à se développer aussi.

## Revendications

1. Dispositif de lutte contre les arthropodes nuisibles aux cultures comprenant i) un élément contenant une phéromone apte à attirer un arthropode, ii) un microorganisme pathogène apte à infecter ledit arthropode, et iii) un support solide **caractérisé en ce que** ledit support solide est essentiellement constitué de matière d'origine végétale riche en carbone assimilable et compactée en blocs ou en galettes, constituant un milieu nutritif pour ledit micro organisme et servant de base audit dispositif, et ledit élément contenant la phéromone étant fixé audit support solide.

2. Dispositif selon la revendication 1 **caractérisé en ce que** ladite matière d'origine végétale est un produit dérivé d'au moins une céréale.

3. Dispositif selon la revendication 2 **caractérisé en ce que** ladite au moins une céréale est apportée sous la forme de grains de céréale soufflés, de grains de céréale cuits et séchés, de farine de céréale, de pâtes alimentaires, d'amidon, ou d'un mélange desdites formes.

4. Dispositif selon la revendication 2 ou 3 **caractérisé en ce que** ladite au moins une céréale est choisie parmi le riz, le maïs, le blé, le sorgho, l'avoine, l'orge.

5. Dispositif selon l'une des revendications précédentes **caractérisé en ce que** ladite phéromone est une phéromone d'agrégation ou d'attraction sexuelle choisie parmi : la sordidine, le ferrolure, le grandlure, le métalure, le rhinolure, le (Z)-3-dodécényl-(E)-2-butènoate, le mélange (0,3:0,7) de génanyl hexanoate et de géranyl octanoate.

6. Dispositif selon l'une des revendications précédentes **caractérisé en ce que** ledit élément contenant ladite phéromone est essentiellement composé d'un matériau polymère solide apte à assurer une diffusion progressive de ladite phéromone.

7. Dispositif selon l'une des revendications 1 à 5 **caractérisé en ce que** ledit élément contenant ladite phéromone est essentiellement composé d'un gel apte à assurer une diffusion progressive de ladite phéromone, coulé dans une coupelle.

8. Dispositif selon l'une des revendications précédentes **caractérisé en ce que** le microorganisme pathogène de l'arthropode visé est un champignon appartenant à l'ordre des Deutéromycètes.

9. Dispositif selon la revendication précédente **caractérisé en ce que** ledit microorganisme pathogène est choisi parmi les espèces appartenant aux genres Beauveria, de préférence *B*. *bassiana, B*. *brongniartii, B. tenella ;* Metarhizium, de préférence *M. anisopliae, M. flavoviride ;* Verticillium, de préférence *V. lecanii ;* Erynia ; Hirsutella ; Entomophtora ; Entomophaga.

10. Dispositif selon l'une des revendications précédentes, **caractérisé en ce que** ledit microorganisme pathogène est sous forme d'une préparation de champignon pathogène appartenant à l'espèce *Beauveria,* et **en ce que** ledit support solide est à base de riz compacté constituant un milieu nutritif pour ledit champignon de l'espèce *Beauveria.*

11. Dispositif selon l'une quelconque des revendications précédentes **caractérisé en ce que** le support solide comprend en outre une substance amérisante.

12. Dispositif selon l'une quelconque des revendications précédentes **caractérisé en ce qu'**il comprend en outre un boitier protecteur doté d'au moins une ouverture apte à laisser entrer et sortir l'arthropode visé.

13. Kit destiné à la lutte contre les arthropodes nuisibles aux cultures, **caractérisé en ce qu'**il comprend :
a) un premier récipient contenant une préparation d'un microorganisme pathogène d'un arthropode nuisible, sous une forme adaptée à sa conservation, et
b) un deuxième récipient contenant au moins un support solide essentiellement constitué de matière d'origine végétale riche en carbone assimilable et compactée en blocs ou en galettes, apte à constituer un milieu nutritif pour ledit microorganisme et à servir de base dudit dispositif, et au moins un élément en matériau polymère solide ou en gel, fixé audit support solide et apte à assurer la diffusion progressive d'une phéromone attractive de l'arthropode visé.

14. Kit selon la revendication précédente pour la fabrication d'au moins un dispositif selon l'une des revendications 1 à 12.

15. Application du dispositif selon l'une des revendications 1 à 12 ou d'un kit selon l'une des revendications 13 ou 14, à la lutte contre *Cosmopolites sordidus, Rhynchophorus ferugineus, Anthonomus grandis, Metamasius hemipterus, Cylas formicarius*), *Oryctes rhinoceros, Agriotes obscurus.*

## Patentansprüche

1. Vorrichtung zur Bekämpfung von für Pflanzenkulturen schädlichen Arthropoden, umfassend i) ein Element, das ein zum Anlocken eines Arthropoden geeignetes Pheromon enthält, ii) einen pathogenen Mikroorganismus, der zur Infektion des Arthropoden fähig ist, und iii) einen festen Träger, **dadurch gekennzeichnet, dass** der feste Träger im Wesentlichen aus Substanz pflanzlichen Ursprungs besteht, die reich an assimilierbarem Kohlenstoff und zu Blöcken oder Waffeln gepresst ist, der ein Nährmedium für den Mikroorganismus bildet und als Basis für die Vorrichtung dient, und dadurch, dass das Element, das das Pheromon enthält, an dem festen Träger befestigt ist.

2. Vorrichtung nach Anspruch 1, **dadurch gekennzeichnet, dass** es sich bei der Substanz pflanzlichen Ursprungs um ein von mindestens einem Getreide stammendes Produkt handelt.

3. Vorrichtung nach Anspruch 2, **dadurch gekennzeichnet, dass** das mindestens eine Getreide in Form von gepufften Getreidekörnern, gekochten und getrockneten Getreidekörnern, Getreidemehl, Nudelteigen, Stärke oder einem Gemisch dieser Formen eingebracht wird.

4. Vorrichtung nach Anspruch 2 oder 3, **dadurch gekennzeichnet, dass** das mindestens eine Getreide aus Reis, Mais, Weizen, Sorghum, Hafer, Gerste ausgewählt ist.

5. Vorrichtung nach einem der vorhergehenden Ansprüche, **dadurch gekennzeichnet, dass** das Pheromon ein Aggregationspheromon oder ein Sexuallockstoff ist, ausgewählt aus: Sordidin, Ferrolure, Grandlure, Metalure, Rhinolure, (Z)-3-Dodecenyl-(E)-2-butenoat, dem Gemisch (0,3:0,7) von Geranylhexanoat und Geranyloctanoat.

6. Vorrichtung nach einem der vorhergehenden Ansprüche, **dadurch gekennzeichnet, dass** das Element, das das Pheromon enthält, im Wesentlichen aus einem festen Polymermaterial besteht, das eine allmähliche Diffusion des Pheromons sicherstellen kann.

7. Vorrichtung nach einem der Ansprüche 1 bis 5, **dadurch gekennzeichnet, dass** das Element, das das Pheromon enthält, im Wesentlichen aus einem in ein Schälchen gegossenen Gel besteht, das eine allmähliche Diffusion des Pheromons sicherstellen kann.

8. Vorrichtung nach einem der vorhergehenden Ansprüche, **dadurch gekennzeichnet, dass** der für pathogene Mikroorganismus des Arthropoden, auf den abgezielt wird, ein Pilz aus der Ordnung der Deuteromycetes ist.

9. Vorrichtung nach dem vorhergehenden Anspruch, **dadurch gekennzeichnet, dass** der pathogene Mikroorganismus aus den Spezies ausgewählt wird, die zu den Gattungen Beauveria, vorzugsweise *B. bassiana, B. brongniartii, B. tenella;* Metarhizium, vorzugsweise M. *anisopliae, M. flavoviride;* Verticillium, vorzugsweise V. *lacanii;* Erynia; Hirsutella; Enthomorpha; Entomophaga gehören.

10. Vorrichtung nach einem der vorhergehenden Ansprüche, **dadurch gekennzeichnet, dass** der pathogene Mikroorganismus in Form einer Zubereitung eines pathogenen Pilzes, der zur Spezies Beauveria gehört, vorliegt, und dadurch, dass der feste Träger auf der Basis von gepresstem Reis ist, der ein Nährmedium für den Pilz der Spezies *Beauveria* bildet.

11. Vorrichtung nach einem der vorhergehenden Ansprüche, **dadurch gekennzeichnet, dass** der feste Träger außerdem eine bittermachende Substanz umfasst.

12. Vorrichtung nach einem der vorhergehenden Ansprüche, **dadurch gekennzeichnet, dass** sie außerdem ein Schutzgehäuse umfasst, das mit mindestens einer Öffnung ausgestattet ist, die den Arthropoden, auf den abgezielt wird, herein- und hinausgelangen lassen kann.

13. Kit zur Bekämpfung von für Pflanzenkulturen schädlichen Arthropoden, **dadurch gekennzeichnet, dass** es Folgendes umfasst:
a) einen ersten Behälter, der eine Zubereitung eines pathogenen Mikroorganismus für einen schädlichen Arthropoden in einer an ihre Konservierung angepassten Form umfasst, und
b) einen zweiten Behälter, enthaltend mindestens einen festen Träger, der im Wesentlichen aus Substanz pflanzlichen Ursprungs besteht, die reich an assimilierbarem Kohlenstoff und zu Blöcken oder Waffeln gepresst ist, der ein Nährmedium für den Mikroorganismus bilden und als Basis für die Vorrichtung dienen kann, und mindestens ein Element aus einem festen Polymermaterial oder aus einem Gel, das an dem festen Träger befestigt ist und die allmähliche Diffusion eines Pheromons sicherstellen kann, das den Arthropoden, auf den abgezielt wird, anlockt.

14. Kit nach dem vorhergehenden Anspruch zur Herstellung mindestens einer Vorrichtung nach einem der Ansprüche 1 bis 12.

15. Verwendung der Vorrichtung nach einem der Ansprüche 1 bis 12 oder eines Kits nach einem der Ansprüche 13 oder 14 zur Bekämpfung von *Cosmopolites sordidus, Rhynchophorus ferugineus, Anthonomus grandis, Metamasius hemipterus, Cylas formicarius*, *Oryctes rhinoceros, Agriotes obscurus.*

## Claims

1. Device to combat arthropod pests of crops, comprising i) an element containing a pheromone capable of attracting an arthropod, ii) a pathogenic microorganism capable of infecting said arthropod and iii) a solid support, **characterized in that** said solid support essentially consists of material of plant origin rich in assimilable carbon and compacted into blocks or cakes, constituting a nutritive medium for said microorganism and serving as a base for said device, said element which contains the pheromone being fixed to said solid support.

2. Device according to Claim 1, **characterized in that** said material of plant origin is a product derived from at least one cereal.

3. Device according to Claim 2, **characterized in that** said at least one cereal is provided in the form of puffed grains of cereal, cooked and dried grains of cereal, cereal flour, dietary pastes, starch or a mixture of said forms.

4. Device according to Claim 2 or 3, **characterized in that** said at least one cereal is chosen from rice, maize, wheat, sorghum, oats and barley.

5. Device according to one of the preceding claims, **characterized in that** said pheromone is an aggregation pheromone or a sexual attraction pheromone, chosen from: sordidin, ferrolure, grandlure, metalure, rhinolure, (*z*)-3-dodecenyl-(E)-2-butenoate or the (0.3:0.7) mixture of geranyl hexanoate and geranyl octanoate.

6. Device according to one of the preceding claims, **characterized in that** said element containing said pheromone is essentially composed of a solid polymeric material capable of ensuring gradual diffusion of said pheromone.

7. Device according to one of Claims 1 to 5, **characterized in that** said element containing said pheromone is essentially composed of a gel capable of ensuring gradual diffusion of said pheromone, cast into a dish.

8. Device according to one of the preceding claims, **characterized in that** the microorganism which is pathogenic to the targeted arthropod is a fungus belonging to the order Deuteromycetes.

9. Device according to the preceding claim, **characterized in that** said pathogenic microorganism is chosen from the species belonging to the genera *Beauveria,* preferably *B*. *bassiana, B*. *brongniartii, B. tenella; Metarhizium,* preferably *M. anisopliae, M. flavoviride; Verticillium,* preferably *V*. *lecanii; Erynia; Hirsutella; Entornophtora* and *Entomophaga.*

10. Device according to one of the preceding claims, **characterized in that** said pathogenic microorganism is in the form of a preparation of pathogenic fungus belonging to the species *Beauveria,* and **in that** said solid support is based on compacted rice constituting a nutritive medium for said fungus of the species *Beauveria*.

11. Device according to any one of the preceding claims, **characterized in that** the solid support also comprises a bittering substance.

12. Device according to any one of the preceding claims, **characterized in that** it also comprises a protective housing fitted with at least one opening capable of allowing the targeted arthropod to enter and exit.

13. Kit intended to combat arthropod pests of crops, **characterized in that** it comprises:
a) a first container containing a preparation of a microorganism which is pathogenic to an arthropod pest, in a form suited to its preservation, and
b) a second container containing at least one solid support essentially consisting of material of plant origin rich in assimilable carbon and compacted into blocks or cakes, capable of constituting a nutritive medium for said microorganism and of serving as a base for said device, and at least one element of solid polymeric material or of gel, fixed to said support and capable of ensuring gradual diffusion of a pheromone which attracts the targeted arthropod.

14. Kit according to the preceding claim, for the manufacture of at least one device according to one of Claims 1 to 12.

15. Application of the device according to one of Claims 1 to 12 or of a kit according to either of Claims 14 and 15, for combating *Cosmopolites sordidus, Rhynchophorus ferugineus, Anthonomus grandis, Metamasius hemipterus, Cylas formicarius, Oryctes rhinoceros* and *Agriotes obscurus.*
